# EUROPÄISCHE PATENTSCHRIFT

(11) **EP 2 861 497 B1**
(45) Veröffentlichungstag und Bekanntmachung des Hinweises auf die Patenterteilung: **07.09.2016**
(21) Anmeldenummer: 13721924.2
(22) Anmeldetag: 18.04.2013
(51) Int. Cl.: B31B 1/00, B65B 35/20, B65G 59/02, B65B 43/14, B65B 43/26, B65B 51/00, B65G 17/20, B65B 43/18, B65B 59/00

(54) **VORRICHTUNG ZUM TRANSPORT VON GEGENSTÄNDEN, INSBESONDERE VON PACKMITTELN**
DEVICE FOR TRANSPORT OF GOODS INCLUDING PACKAGING MEANS
DISPOSITIF DE TRANSPORT DES MARCHANDISES COMPRENANT DES MOYENS D'EMBALLAGE

(30) Priorität: 14.06.2012 DE 102012209978
(43) Veröffentlichungstag der Anmeldung: 22.04.2015
(73) Patentinhaber: Robert Bosch GmbH, 70442 Stuttgart (DE)
(72) Erfinder: WEIS, Josef, 69226 Nussloch (DE); GRABOWSKI, Ruediger, 71332 Waiblingen (DE); RAPP, Reinhard, 70563 Stuttgart (DE)
(86) Internationale Anmeldenummer: PCT/EP2013/058065
(87) Internationale Veröffentlichungsnummer: WO 2013/185957

(56) Entgegenhaltungen:
- EP-A1- 1 530 541
- DE-A1-102007 034 872
- US-A1- 2009 320 958

## Beschreibung

unabhängig angetriebenen Transportelementen behalten die starre Stationsteilung bei. Hierdurch ergeben sich relativ lange Durchlaufzeiten durch eine derartige Kartoniermaschine und eine unnötig platzintensive Bauweise. Ferner ist aus der EP 1 530 541 A1 eine Vorrichtung nach dem Oberbegriff des Anspruches 1 bekannt.

### Offenbarung der Erfindung

Die erfindungsgemäße Vorrichtung zum Transport von Gegenständen, insbesondere zum Transport von Packmitteln, mit den Merkmalen des Anspruchs 1 weist demgegenüber den Vorteil auf, dass eine starre Teilung an der Transporteinrichtung aufgelöst ist. Hierdurch können Geschwindigkeitsschwankungen bzw. Stauungen an verschiedenen Modulen, welche an der Transportstrecke angeordnet sind, bzw. unerwünschte Stillstände vermieden werden und Synchronisationsprobleme behoben werden. Außerdem führt die Auflösung der festen Teilung auch zu einer zeitliche Entzerrung einzelner Arbeitsschritte dahingehend, dass nicht mehr wie im Stand der Technik aufgrund der bestehenden Taktung der Maschine jeder Vorgang einen immer gleiche Anteil an der festen Taktzeit beanspruchen muss, sondern jeder Arbeitsschritt nicht mehr als genau die erforderliche Zeit beanspruchen muss. Dadurch frei werdende Zeitreserven können für einen langsameren und produktschonenderen Ablauf anderer Vorgänge oder eine Erhöhung der Ausbringleistung genutzt werden. Dies wird erfindungsgemäß dadurch erreicht, dass die Vorrichtung eine umlaufende Förderstrecke und eine Vielzahl von Fördereinrichtungen aufweist, welche an der Förderstrecke umlaufen. Dabei umfasst jede Fördereinrichtung ein erstes Förderelement und ein zweites Förderelement, welche jeweils individuell und unabhängig voneinander antreibbar sind. Dabei transportieren das erste und zweite Förderelement gemeinsam einen Gegenstand, z.B. einen Karton. Somit bilden zwei frei zueinander verfahrbare Förderelemente eine gemeinsame Fördereinrichtung, welche an der Förderstrecke umläuft. Weiterhin weisen die beiden Förderelemente jeder Fördereinrichtung jeweils eine voneinander unterschiedliche Handhabungseinrichtung auf. Durch diese erfindungsgemäße Idee können zwei verschiedene Handhabungseinrichtungen an den beiden Förderelementen der gemeinsamen Fördereinrichtung angeordnet und individuell bewegt werden.

Die Unteransprüche zeigen bevorzugte Weiterbildungen der Erfindung.

Vorzugsweise sind die Förderelemente mittels Linearantrieben antreibbar. Hierdurch kann ein einfach aufgebautes und sicher funktionierendes Fördersystem bereitgestellt werden, mit dem individuelle und unabhängig voneinander antreibbare Förderelemente bereitstellbar sind.

Weiter bevorzugt ist die umlaufende Förderstrecke vertikal angeordnet. Hierdurch ergibt sich an der Förderstrecke ein Obertrum und ein Untertrum und es ist möglich, dass die Gegenstände am Untertrum beförderbar sind. Hierdurch kann ein Raum unterhalb der Förderstrecke, beispielsweise durch Anordnung von verschiedensten Handhabungs-Modulen, genutzt werden. Vorzugsweise werden die Gegenstände ausschließlich am Untertrumbereich der Förderstrecke transportiert.

Vorzugsweise ist dabei die Handhabungseinrichtung des ersten Förderelements eine Aufrichteinrichtung zum Aufrichten eines zusammengefalteten Packmittels und die Handhabungseinrichtung des zweiten Förderelements ist vorzugsweise eine Halteeinrichtung zum Halten des Packmittels. Die Halteeinrichtung ist bevorzugt ein Saugelement oder ein Greifer oder dergleichen. Die Aufrichteinrichtung ist vorzugsweise ein schwenkbarer Hebel.

Gemäß einer weiteren bevorzugten Ausgestaltung der vorliegenden Erfindung ist unter der vertikal angeordneten Förderstrecke ein Packmittelmodul mit einem Packmittelvorrat und/oder ein Verschlussmodul zum Verschließen von Packmitteln und/oder ein Kennzeichnungsmodul zum Kennzeichnen von Packmitteln und/oder ein Waagemodul zum Wiegen angeordnet. Vorzugsweise umfasst das Verschlussmodul Vorrichtungen, um Laschen des Packmittels zu schließen und anschließend beispielsweise mittels Heißleim zu fixieren. Das Kennzeichnungsmodul kann beispielsweise eine Druckeinrichtung umfassen, welche direkt auf das Packmittel eine Kennzeichnung aufdruckt, oder alternativ eine Etikettklebeeinheit umfassen, welche Etiketten oder dergleichen auf das Packmittel aufklebt.

Weiter bevorzugt ist seitlich der vertikal angeordneten Förderstrecke ein Belademodul zum seitlichen Beladen eines durch die Fördereinrichtung Vorzugsweise sind die Förderelemente mittels Linearantrieben antreibbar. Hierdurch kann ein einfach aufgebautes und sicher funktionierendes Fördersystem bereitgestellt werden, mit dem individuelle und unabhängig voneinander antreibbare Förderelemente bereitstellbar sind.

Weiter bevorzugt ist die umlaufende Förderstrecke vertikal angeordnet. Hierdurch ergibt sich an der Förderstrecke ein Obertrum und ein Untertrum und es ist möglich, dass die Gegenstände am Untertrum beförderbar sind. Hierdurch kann ein Raum unterhalb der Förderstrecke, beispielsweise durch Anordnung von verschiedensten Handhabungs-Modulen, genutzt werden. Vorzugsweise werden die Gegenstände ausschließlich am Untertrumbereich der Förderstrecke transportiert.

Besonders bevorzugt weisen die beiden Förderelemente jeder Fördereinrichtung jeweils eine voneinander unterschiedliche Handhabungseinrichtung auf. Vorzugsweise ist dabei die Handhabungseinrichtung des ersten Förderelements eine Aufrichteinrichtung zum Aufrichten eines zusammengefalteten Packmittels und die Handhabungseinrichtung des zweiten Förderelements ist vorzugsweise eine Halteeinrichtung zum Halten des Packmittels. Die Halteeinrichtung ist bevorzugt ein Saugelement oder ein Greifer oder dergleichen. Die Aufrichteinrichtung ist vorzugsweise ein schwenkbarer Hebel.

Gemäß einer weiteren bevorzugten Ausgestaltung der vorliegenden Erfindung ist unter der vertikal angeordneten Förderstrecke ein Packmittelmodul mit einem Packmittelvorrat und/oder ein Verschlussmodul zum Verschließen von Packmitteln und/oder ein Kennzeichnungsmodul zum Kennzeichnen von Packmitteln und/oder ein Waagemodul zum Wiegen angeordnet. Vorzugsweise umfasst das Verschlussmodul Vorrichtungen, um Laschen des Packmittels zu schließen und anschließend beispielsweise mittels Heißleim zu fixieren. Das Kennzeichnungsmodul kann beispielsweise eine Druckeinrichtung umfassen, welche direkt auf das Packmittel eine Kennzeichnung aufdruckt, oder alternativ eine Etikettklebeeinheit umfassen, welche Etiketten oder dergleichen auf das Packmittel aufklebt.

Weiter bevorzugt ist seitlich der vertikal angeordneten Förderstrecke ein Belademodul zum seitlichen Beladen eines durch die Fördereinrichtung geförderten Packmittels vorgesehen. Vorzugsweise umfasst das Belademodul wenigstens ein Einschubelement. Weiter bevorzugt umfasst das Belademodul einen geschlossenen, insbesondere ovalförmigen, Umlauf, an welchem eine Vielzahl von Einschubelementen umlaufen. Hierdurch kann ein Einschiebevorgang in waagerechter Richtung auch unter Bewegung des Packmittels mittels der erfindungsgemäßen Vorrichtung erfolgen, wobei die Einschubelemente mit gleicher Geschwindigkeit am Umlauf bewegt werden. Besonders bevorzugt sind dabei die Einschubelemente am Umlauf des Belademoduls jeweils individuell und unabhängig voneinander antreibbar, z.B. mittels Linearantrieb. Auch hierdurch kann eine unabhängige Einschubbewegung durch einzelne Einschubelemente realisiert werden. Durch die Verwendung des Umlaufs am Belademodul wird erreicht, dass eine Arbeitsstrecke und eine Rücklaufstrecke nicht identisch sind und beispielsweise die Einschubelemente mit flexiblen Bewegungsprofilen an den jeweiligen Strecken bewegt werden können. Auch wird durch dieses flexible Belademodul erreicht, dass Formatänderungen bzw. Formatumstellungen keinen Einfluss auf das Belademodul haben, welches flexibel an derartige Formatänderungen einfach durch Änderung des Bewegungsablaufs angepasst werden kann. Für den Rücklauf können die Einschubelemente abschnittsweise auch antriebslos geführt werden oder durch mechanische Mitnahmen oder Fahren im Stau oder dergleichen oder unter Nutzung vorhandener Bewegungsenergie bewegt werden.

Gemäß einer weiteren bevorzugten Ausgestaltung der vorliegenden Erfindung sind die zu transportierenden Gegenstände Packmittel, insbesondere Kartons. Besonders bevorzugt ist dabei die Vorrichtung eine Kartonverpackungsvorrichtung, bei der ein zusammengelegter Karton aufgenommen und aufgerichtet (aufgeklappt) wird, anschließend beladen wird und dann verschlossen und ggf. noch gekennzeichnet wird, wobei alle Vorgänge vorzugsweise am Untertrumbereich der umlaufenden Förderstrecke vorgenommen werden. Anschließend kann eine Übergabe auf ein weiteres Transportsystem erfolgen.

Zeichnung Nachfolgend werden bevorzugte Ausführungsbeispiele der Erfindung unter Bezugnahme auf die begleitende Zeichnung im Detail beschrieben. In der Zeichnung ist:
- Figur 1: eine schematische Seitenansicht einer Verpackungsanordnung gemäß einem ersten Ausführungsbeispiel der Erfindung und
- Figur 2: eine schematische Seitenansicht einer Verpackungsanordnung gemäß einem zweiten Ausführungsbeispiel der Erfindung.

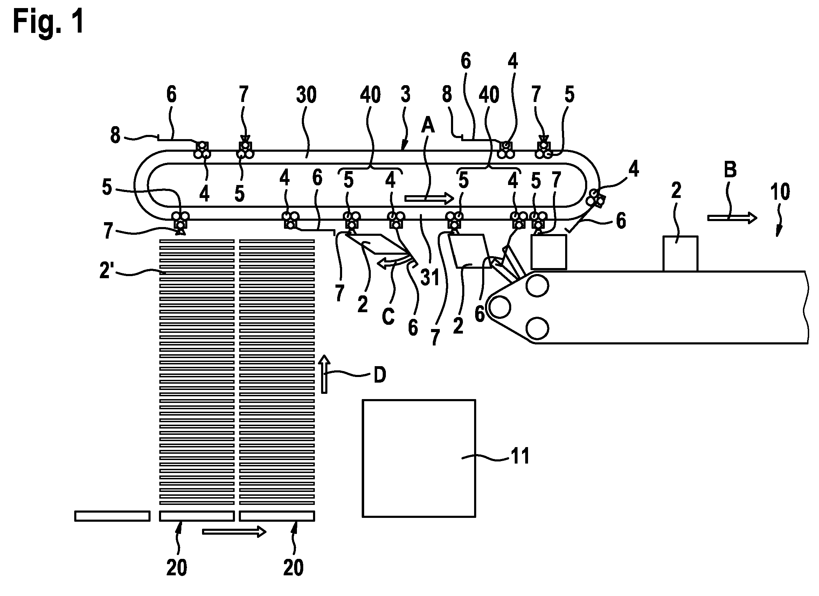

Bevorzugte Ausführungsformen der Erfindung Nachfolgend wird mit Bezugnahme auf Figur 1 eine Verpackungsanordnung 1 gemäß einem ersten bevorzugten Ausführungsbeispiel der Erfindung im Detail beschrieben.

Wie aus Figur 1 ersichtlich ist, umfasst die Verpackungsanordnung 1 zum Transportieren eines Packmittels 2 eine umlaufende Förderstrecke 3, welche ovalförmig angeordnet ist. Die umlaufende Förderstrecke 3 ist dabei in Vertikalrichtung angeordnet, so dass ein Obertrumbereich 30 und ein Untertrumbereich 31 vorhanden ist. Eine Förderung der Packmittel 2 erfolgt dabei am Untertrumbereich 31 in hängender Weise.

An der umlaufenden Förderstrecke ist eine Vielzahl von Förderelementen angeordnet, wobei das Bezugszeichen 4 ein erstes Förderelement und das Bezugszeichen 5 ein zweites Förderelement bezeichnet. Die beiden Förderelemente 4, 5 weisen unterschiedliche Handhabungseinrichtungen auf, wobei das erste Förderelement 4 eine Aufrichteinrichtung 6 aufweist und das zweite Förderelement 5 eine Halteeinrichtung 7 aufweist. Die Aufrichteinrichtung 6 des ersten Förderelements ist dabei ein schwenkbarer Hebel, dessen freies Ende hakenförmig umgebogen ist, und eine Laschenöffnungseinrichtung 8 bildet. Die Halteeinrichtung 7 dieses Ausführungsbeispiels ist ein Sauger, kann alternativ aber auch beispielsweise ein Greifer oder dergleichen sein.

Wie in Figur 1 durch die geschweifte Klammer angedeutet, bilden dabei ein erstes Förderelement 4 und ein zweites Förderelement 5 eine gemeinsame Fördereinrichtung 40. Die beiden Förderelemente 4, 5 der Fördereinrichtung 40 wirken dabei bei der Entnahme und dem Aufklappen des Packmittels 2 zusammen. Dabei ist trotzdem jedes einzelne Förderelement jeder Fördereinrichtung 40 individuell und unabhängig von den anderen Förderelementen ansteuerbar und bewegbar, vorzugsweise mittels Linearantrieb.

Wie weiter aus Figur 1 ersichtlich ist, sind die Packmittel 2 in mehreren Packmittelvorräten 20 angeordnet, wobei das Bezugszeichen 2' die jeweils in den Packmittelvorräten zusammengefalteten Zustände der Packmittel kennzeichnet. Da die umlaufende Förderstrecke 3 vertikal angeordnet ist, kann der Packmittelvorrat 20 unterhalb der Förderstrecke 3 angeordnet werden. Somit können die beiden zusammenwirkenden ersten und zweiten Förderelemente 4, 5, welche die gemeinsame Fördereinrichtung 40 bilden, jeweils ein oberstes, zusammengefaltetes Packmittel 2' vom Stapel entnehmen. Wie in Figur 1 angedeutet, können dabei unter der Förderstrecke 3 mehrere Packmittelstapel vorgesehen werden, wobei insbesondere ein flexibler Wechsel von Entnahmepositionen des zusammengefalteten Packmittels 2' zwischen den einzelnen Stapeln möglich ist. Da die Entnahme der zusammengelegten Packmittel 2' von oben erfolgt, ist eine Reststapelgröße im Packmittelvorrat unabhängig, so dass immer eine sichere Verarbeitbarkeit ermöglicht wird, da die Packmittelstapel jeweils nach einer Entnahme in ihrer Höhe nachgestellt werden (Pfeils D). Ferner können die Packmittelvorräte auch außerhalb der Verpackungsanordnung mit Packmitteln vorbefüllt werden und während eines laufenden Produktionsprozesses ohne Anhalten der Anlage gegen leere Magazine ausgetauscht werden.

Weiterhin ermöglicht die Verwendung von zwei individuell antreibbaren und verfahrbaren ersten und zweiten Förderelementen 4, 5, dass formatunabhängig jeweils Packmittel vom Packmittelvorrat 20 entnommen werden können und aufgerichtet werden können. Erfindungsgemäß ist es nämlich möglich, dass ein Abstand in Laufrichtung zwischen dem ersten und zweiten Förderelement individuell auf die jeweilige Verpackungsgröße durch eine Steuereinheit vorgegeben werden kann, so dass problemlos Packmittel verschiedenster Größen verarbeitet werden können. Hierbei gibt es keinerlei Formateinschränkungen, beispielsweise durch Halter oder Aufnahmen für die Verpackungen oder dergleichen. Der Abstand zwischen dem ersten und zweiten Förderelement 4, 5 kann jeweils individuell eingestellt werden. Auch ist es mit der erfindungsgemäßen Verpackungsanordnung möglich, z.B. abwechselnd unterschiedlich große Packmittel zu verarbeiten.

Bei dem in Figur 1 gezeigten Ausführungsbeispiel wird nun durch die durch das erste und das zweite Förderelement 4, 5 gebildete gemeinsame Fördereinrichtung 40 erst ein zusammengefaltetes Packmittel 2' vom Packmittelvorrat 20 entnommen. Anschließend wird das zusammengefaltete Packmittel durch Schwenken der Aufrichteinrichtung 6 in Richtung des Pfeils C aufgerichtet, wobei die ersten und zweiten Förderelemente entlang der umlaufenden Förderstrecke 3 in Richtung des Pfeils A bewegt werden. Die Schwenkrichtung der Aufrichteinrichtung 6 ist hierbei entgegen der Förderrichtung an der Förderstrecke. Zum Aufrichten des zusammengefalteten Packmittels 2' können dabei die beiden Förderelemente 4, 5 mit gleicher Geschwindigkeit bewegt werden oder alternativ kann eines der Förderelemente 4, 5 schneller als das andere der Förderelemente bewegt werden, wodurch das Aufrichten bewirkt wird. Das aufgerichtete Packmittel 2 wird dann an ein Transportsystem 10 übergeben, in welchem eine Befüllung des aufgerichteten Packmittels erfolgen kann, wobei ein Weitertransport in Richtung des Pfeils B erfolgt.

Ferner ist mit dem Bezugszeichen 11 ein Ausscheidebehälter gekennzeichnet, in welchem defekte Packmittel ausgeschieden werden können.

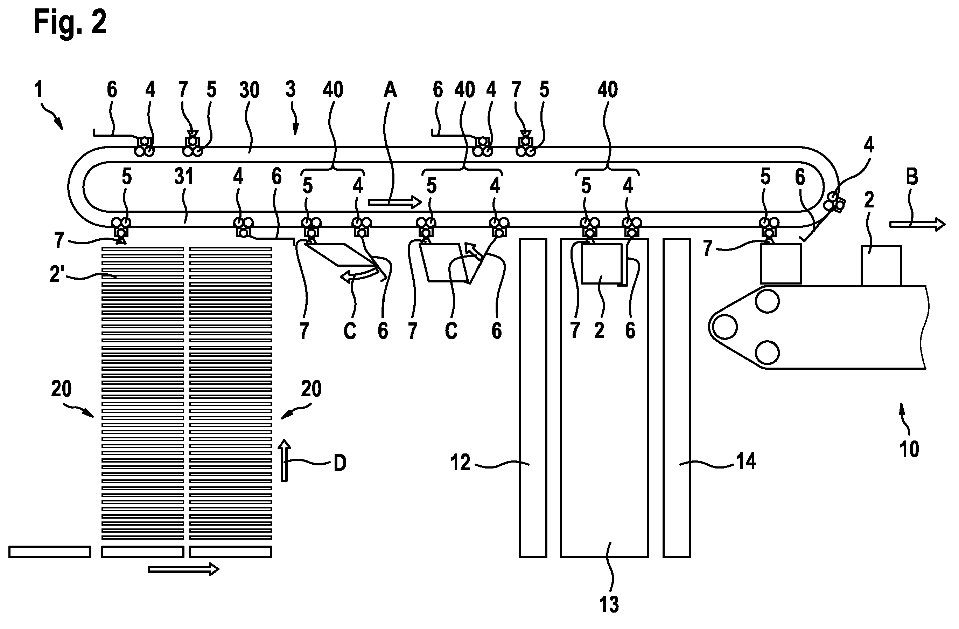

Figur 2 zeigt eine Verpackungsanordnung 1 gemäß einem zweiten Ausführungsbeispiel der Erfindung, wobei gleiche bzw. technisch gleiche Bauteile mit den gleichen Bezugszeichen wie im ersten Ausführungsbeispiel bezeichnet sind.

Wie beim ersten Ausführungsbeispiel, bilden beim zweiten Ausführungsbeispiel ein erstes Förderelement 4 und ein zweites Förderelement 5 eine gemeinsame Fördereinrichtung 40. Beim zweiten Ausführungsbeispiel ist unterhalb der umlaufenden Förderstrecke 30 jedoch noch neben der Entnahmefunktion und der Aufrichtfunktion des zusammengefalteten Packmittels 2 ein Kennzeichnungsmodul 12 und ein Verschlussmodul 14 angeordnet. Durch das Kennzeichnungsmodul 12 erfolgt eine Bedruckung des Packmittels 2 zur Kennzeichnung des Inhalts. Ferner wird durch ein Belademodul 13 das geöffnete Packmittel 2 mit Packgütern befüllt. Das Belademodul 13 ist dabei seitlich an der vertikal angeordneten Förderstrecke 3 angeordnet, so dass ein seitliches Einschieben der Packgüter in das geöffnete Packmittel 2 möglich ist. Um ein fehlerfreies Einschieben zu ermöglichen, ist dabei am freien Ende der Aufrichteinrichtung 6 eine Laschenöffnungseinrichtung 8 in Form eines umgebogenen hakenförmigen Elements vorgesehen, welches die Laschen des Packmittels 2 öffnet und in Offenstellung hält. In Transportrichtung (Pfeil A) dem Belademodul 13 nachgeordnet ist dann ein Verschlussmodul 14, welches das beladene, noch offene Packmittel 2 verschließt. Das Verschlussmodul 14 kann dabei beispielsweise aktive Elemente, z.B. Greifer oder dergleichen, und/oder passive Elemente (feststehende Führungsschienen oder dergleichen) aufweisen, um den Verschlussvorgang auszuführen.

Auch im zweiten Ausführungsbeispiel sind die einzelnen Förderelemente 4, 5 jeweils wieder individuell und unabhängig voneinander antreibbar. Somit können insbesondere bei den verschiedenen Modulen unterschiedliche Geschwindigkeiten realisiert werden. Beispielsweise kann beim Kennzeichnungsmodul ein vollständiges Anhalten der durch das erste und zweite Förderelement 4, 5 gebildeten gemeinsamen Fördereinrichtung 40 ausgeführt werden. Im Gegensatz dazu kann beim Beladungsmodul 13 eine vorbestimmte Geschwindigkeit der durch das erste und zweite Förderelement 4, 5 gebildeten gemeinsamen Fördereinrichtung eingehalten werden, wobei das Belademodul ein entsprechend mitbewegtes Einschiebeelement aufweist. Auch beim Verschlussmodul 14 können beispielsweise aktive Verschlusselemente, wie Greifer oder dergleichen, mit vorbestimmten Geschwindigkeiten mit dem bewegten Packmittel mitbewegt werden.

Zusammenfassend ist somit für die beschriebenen Ausführungsbeispiele der erfindungsgemäßen Verpackungsanordnung 1 festzustellen, dass ein hängender Transport von Packmitteln, insbesondere Karton-Packmitteln, möglich ist, wobei gleichzeitig auch eine Entnahme und ein Aufrichten von zusammengelegten Packmitteln möglich ist. Durch die hängende Anordnung der Packmittel infolge der vertikal angeordneten Förderstrecke 3 ist es somit möglich, den Raum unterhalb der transportierten Packmittel für die Anordnung verschiedenster Module zu nutzen. Die Förderelemente werden an der Förderstrecke dabei individuell bewegt und bilden dabei jeweils ein erstes Förderelement 4 und ein zweites Förderelement 5 eine gemeinsame Fördereinrichtung 40, welche den Fördervorgang eines einzelnen Gegenstandes an der Förderstrecke 3 ausführen.

Weiterhin kann durch die Zusammenfassung (zeitliche Kombination) von zwei einzelnen Förderelementen zu einer gemeinsamen Fördereinrichtung 40 eine starre Teilung an der Förderstrecke 3 aufgehoben werden, da die einzelnen Förderelemente 4, 5 jeweils individuell und unabhängig voneinander antreibbar sind. Hierdurch kann auch eine flexible Anordnung verschiedenster Handhabungsmodule an der Förderstrecke 3 vorgenommen werden, ohne dass sich aufgrund einer starren Teilung hierbei unerwünschte Stauungseffekte oder dergleichen ergeben. Dabei wird insbesondere eine räumlich flexible Anordnung von Handhabungsmodulen ermöglicht und so eine platzsparende Bauweise der gesamten Transportvorrichtung erreicht. Auch müssen keine Leerstationen oder dergleichen zur Vermeidung von Stauungen vorgesehen werden. Weiterhin können beispielsweise bei Formatänderungen auf einfache Weise zusätzliche Handhabungsmodule eingebaut werden bzw. entfernt werden. Die individuelle Antreibbarkeit der Förderelemente 4, 5 ermöglicht es ferner, dass zeitlich kritische Handhabungsvorgänge beispielsweise langsamer ablaufen könnten und die dafür zusätzlich aufgewandte Zeit kann bei anderen Handhabungsvorgängen wieder aufgeholt werden. Hierdurch können zusätzliche Ausbringungsreserven der Maschine erschlossen werden. Somit können je nach Handhabungsmodul unterschiedliche Bewegungsabläufe mittels der erfindungsgemäßen Transportvorrichtung erreicht werden.

## Patentansprüche

1. Vorrichtung zum Transport von Gegenständen, insbesondere Packmitteln, umfassend
- eine umlaufende Förderstrecke (3),
- eine Vielzahl von Fördereinrichtungen (40), welche an der Förderstrecke (3) umlaufen,
- wobei jede Fördereinrichtung (40) ein erstes Förderelement (4) und ein zweites Förderelement (5) umfasst,
- wobei die Förderelemente (4, 5) jeweils individuell und unabhängig voneinander antreibbar sind, und
- wobei die Förderelemente (4, 5) eingerichtet sind, gemeinsam einen Gegenstand (2) zu transportieren,
**dadurch gekennzeichnet, dass**
- das erste Förderelement (4) und das zweite Förderelement (5) jeder Fördereinrichtung (40) jeweils eine Handhabungseinrichtung (7,6) aufweisen, wobei die Handhabungseinrichtung des ersten Förderelements (4) unterschiedlich zur Handhabungseinrichtung des zweiten Förderelements (5) ist.

2. Vorrichtung nach Anspruch 1, **dadurch gekennzeichnet, dass** die Förderelemente (4, 5) mittels Linearantrieben unabhängig voneinander antreibbar sind.

3. Vorrichtung nach einem der vorhergehenden Ansprüche, **dadurch gekennzeichnet, dass** die umlaufende Förderstrecke (3) vertikal angeordnet ist.

4. Vorrichtung nach Anspruch 3, **dadurch gekennzeichnet, dass** die Gegenstände (2) an einem Untertrumbereich (31) der Förderstrecke (3) transportiert werden.

5. Vorrichtung nach einem der Ansprüche 1 bis 4, **dadurch gekennzeichnet, dass** die erste Handhabungseinrichtung des ersten Förderelements (4) eine Aufrichteinrichtung zum Aufrichten eines zusammengefalteten Packmittels ist.

6. Vorrichtung nach einem der Ansprüche 1 bis 5, **dadurch gekennzeichnet, dass** die Handhabungseinrichtung des zweiten Förderelements (5) eine Halteeinrichtung zum Halten eines Packmittels ist.

7. Vorrichtung nach einem der Ansprüche 5 oder 6, **dadurch gekennzeichnet, dass** die Aufrichteinrichtung ein schwenkbarer Hebel (6) ist.

8. Vorrichtung nach einem der Ansprüche 3 bis 7, **dadurch gekennzeichnet, dass** unter der vertikal angeordneten Förderstrecke (3) ein Packmittelmodul mit einem Packmittelvorrat (20) und/oder ein Verschlussmodul (14) zum Verschließen von Packmitteln und/oder ein Kennzeichnungsmodul (12) zum Kennzeichnen von Packmitteln und/oder ein Waagemodul zum Wiegen von leeren und/oder beladenen Packmitteln, angeordnet ist.

9. Vorrichtung nach einem der Ansprüche 3 bis 8, **dadurch gekennzeichnet, dass** seitlich an der vertikal angeordneten Förderstrecke (3) ein Belademodul (13) zum seitlichen Beladen eines an der Förderstrecke (3) geförderten Packmittels (2) angeordnet ist.

10. Vorrichtung nach Anspruch 9, **dadurch gekennzeichnet, dass** das Belademodul (13) wenigstens ein Einschubelement umfasst.

11. Vorrichtung nach Anspruch 10, **dadurch gekennzeichnet, dass** das Belademodul einen geschlossenen, insbesondere ovalförmigen, Umlauf umfasst, in welchem eine Vielzahl von Einschubelementen umläuft, wobei die Einschubelemente insbesondere jeweils individuell und unabhängig voneinander antreibbar sind.

12. Vorrichtung nach einem der vorhergehenden Ansprüche, **dadurch gekennzeichnet, dass** die zu transportierenden Gegenstände Packmittel, insbesondere Kartons, sind.

13. Vorrichtung nach einem der vorhergehenden Ansprüche, **dadurch gekennzeichnet, dass** die Vorrichtung eine Kartonverpackungsvorrichtung ist.

## Claims

1. Apparatus for transporting articles, in particular packaging means, comprising
- a circulating conveying route (3),
- a multiplicity of conveying devices (40), which circulate on the conveying route (3),
- wherein each conveying device (40) comprises a first conveying element (4) and a second conveying element (5),
- wherein the conveying elements (4, 5) can each be driven individually and independently of one another, and
- wherein the conveying elements (4, 5) are intended to transport an article (2) together, **characterized in that**
- the first conveying element (4) and the second conveying element (5) of each conveying device (40) each have a handling device (7,6), wherein the handling device of the first conveying element (4) differs from the handling device of the second conveying element (5).

2. Apparatus according to Claim 1, **characterized in that** the conveying elements (4, 5) can be driven independently of one another by means of linear drives.

3. Apparatus according to one of the preceding claims, **characterized in that** the circulating conveying route (3) is arranged vertically.

4. Apparatus according to Claim 3, **characterized in that** the articles (2) are transported on a lower-strand region (31) of the conveying route (3).

5. Apparatus according to one of Claims 1 to 4, **characterized in that** the first handling device of the first conveying element (4) is an erecting device for erecting a collapsed packaging means.

6. Apparatus according to one of Claims 1 to 5, **characterized in that** the handling device of the second conveying element (5) is a retaining device for retaining a packaging means.

7. Apparatus according to either of Claims 5 and 6, **characterized in that** the erecting device is a pivotable lever (6).

8. Apparatus according to one of Claims 3 to 7, **characterized in that** the vertically arranged conveying route (3) has arranged beneath it a packaging-means module with a packaging-means store (20) and/or a closure module (14) for closing packaging means and/or an identifying module (12) for providing packaging means with identification and/or a weighing module for weighing empty and/or loaded packaging means.

9. Apparatus according to one of Claims 3 to 8, **characterized in that** the vertically arranged conveying route (3) has arranged to the side thereof a loading module (13) for laterally loading a packaging means (2) conveyed on the conveying route (3).

10. Apparatus according to Claim 9, **characterized in that** the loading module (13) comprises at least one pushing-in element.

11. Apparatus according to Claim 10, **characterized in that** the loading module comprises a closed, in particular oval, circulatory path, in which a multiplicity of pushing-in elements circulates, wherein the pushing-in elements can each be driven in particular individually and independently of one another.

12. Apparatus according to one of the preceding claims, **characterized in that** the articles which are to be transported are packaging means, in particular cartons.

13. Apparatus according to one of the preceding claims, **characterized in that** the apparatus is a cartoning apparatus.

## Revendications

1. Dispositif pour le transport d'objets, en particulier de moyens d'emballage, comprenant :
- une section de transport en mouvement (3),
- une pluralité de dispositifs de transport (40) qui circulent sur la section de transport (3),
- chaque dispositif de transport (40) comprenant un premier élément de transport (4) et un deuxième élément de transport (5),
- les éléments de transport (4, 5) pouvant à chaque fois être entraînés individuellement et indépendamment l'un de l'autre, et
- les éléments de transport (4, 5) étant prévus pour transporter en commun un objet (2),
**caractérisé en ce que**
- le premier élément de transport (4) et le deuxième élément de transport (5) de chaque dispositif de transport (40) présentent chacun un dispositif de manipulation (7, 6), le dispositif de manipulation du premier élément de transport (4) étant différent du dispositif de manipulation du deuxième élément de transport (5).

2. Dispositif selon la revendication 1, **caractérisé en ce que** les éléments de transport (4, 5) peuvent être entraînés indépendamment l'un de l'autre par des entraînements linéaires.

3. Dispositif selon l'une quelconque des revendications précédentes, **caractérisé en ce que** la section de transport en circulation (3) est disposée verticalement.

4. Dispositif selon la revendication 3, **caractérisé en ce que** les objets (2) sont transportés sur une région de tronçon inférieur (31) de la section de transport (3).

5. Dispositif selon l'une quelconque des revendications 1 à 4, **caractérisé en ce que** le premier dispositif de manipulation du premier élément de transport (4) est un dispositif de redressement pour redresser un moyen d'emballage replié.

6. Dispositif selon l'une quelconque des revendications 1 à 5, **caractérisé en ce que** le dispositif de manipulation du deuxième élément de transport (5) est un dispositif de retenue pour retenir un moyen d'emballage.

7. Dispositif selon l'une quelconque des revendications 5 ou 6, **caractérisé en ce que** le dispositif de redressement est un levier pivotant (6).

8. Dispositif selon l'une quelconque des revendications 3 à 7, **caractérisé en ce que** sous la section de transport disposée verticalement (3) est disposé un module de moyens d'emballage avec une réserve de moyens d'emballage (20) et/ou un module de fermeture (14) pour fermer des moyens d'emballage et/ou un module de marquage (12) pour marquer des moyens d'emballage et/ou un module de pesée pour peser des moyens d'emballage vides et/ou chargés.

9. Dispositif selon l'une quelconque des revendications 3 à 8, **caractérisé en ce qu'**un module de chargement (13) pour le chargement latéral d'un moyen d'emballage (2) transporté sur la section de transport (3) est disposé latéralement sur la section de transport disposée verticalement (3).

10. Dispositif selon la revendication 9, **caractérisé en ce que** le module de chargement (13) comprend au moins un élément d'insertion.

11. Dispositif selon la revendication 10, **caractérisé en ce que** le module de chargement comprend un circuit fermé, en particulier de forme ovale, dans lequel circule une pluralité d'éléments d'insertion, les éléments d'insertion pouvant notamment être entraînés à chaque fois individuellement et indépendamment les uns des autres.

12. Dispositif selon l'une quelconque des revendications précédentes, **caractérisé en ce que** les objets à transporter sont des moyens d'emballage, en particulier des cartons.

13. Dispositif selon l'une quelconque des revendications précédentes, **caractérisé en ce que** le dispositif est un dispositif d'emballage en cartons.
